# EUROPÄISCHE PATENTSCHRIFT

(11) **EP 1 312 591 B1**
(45) Veröffentlichungstag und Bekanntmachung des Hinweises auf die Patenterteilung: **31.10.2007**
(21) Anmeldenummer: 01126970.1
(22) Anmeldetag: 13.11.2001
(51) Int. Cl.: C04B 30/02, C04B 14/42

(54) **Flächiger Hochtemperatur-Isolierkörper sowie Verfahren zur Herstellung eines solchen Isolierkörpers auf Langsiebanlagen**
Planar bodies for high-temperature insulation and process for fabricating such bodies on Fourdrinier type machines
Corps isolants plans haute-température et procédé de fabrication de tels corps sur machines type Fourdrinier

(43) Veröffentlichungstag der Anmeldung: 21.05.2003
(73) Patentinhaber: Unifrax GmbH, 07989 Teichwolframsdorf (DE)
(72) Erfinder: Tolkmitt, Renate, 07973 Greiz (DE); Neefe, Frank, 08491 Netzschkau (DE); Müller, Wolfgang, 07989 Teichwolframsdorf (DE)
(74) Vertreter: Kruspig, Volkmar

(56) Entgegenhaltungen:
- EP-A- 0 936 199
- WO-A-94/14885
- WO-A-97/02219
- DE-A- 4 402 244
- GB-A- 2 082 640
- US-A- 5 800 676
- US-A- 5 869 010
- CHEMICAL ABSTRACTS, vol. 109, no. 6, 8. August 1988 (1988-08-08) Columbus, Ohio, US; abstract no. 42597z, Seite 308; XP000055403 & JP 63 074949 A (Y. TSUCHIMOTO, ET AL.) 5. April 1988 (1988-04-05)

## Beschreibung

Die Erfindung betrifft einen flächigen Hochtemperatur-Isolierkörper bestehend aus anorganischem Faserfüllstoff, natürlichem Wollastonit sowie Bindemittel und ein Verfahren zur Herstellung von derartigen flächigen Hochtemperaturkörpern auf Langsiebanlagen.

Aus der EP 0 936 199 A2 ist ein Verfahren zur Herstellung vakuumgeformter feuerfester Teile und Isolierkörper zur Hochtemperatur-Isolierung bis in den Bereich von 1250°C Anwendungstemperatur bekannt.

Gemäß dem dort vorgestellten Verfahren soll Wollastonit mit nadeliger, faseriger Kristallform mit Wasser und bevorzugt einem Bindemittel zu einem Slurry vermischt und anschließend in eine Form gefüllt werden. Durch eine Vakuumbehandlung wird die Flüssigkeit abgesaugt und der so gebildete Formteil getrocknet. Der Isolierkörper zeichnet sich dadurch aus, daß neben Wollastonit ein Bindemittel und anorganische Füllfasern enthalten sind, wobei im getrockneten Zustand eine Dichte im Bereich von < 0,8 g/cm³ vorliegt.

Gemäß der Lehre nach EP 0 936 199 A2 gelingt es zwar, einen Isolierkörper zur Hochtemperatur-Isolierung anzugeben, der im wesentlichen umweltverträglich und biolöslich ist, da Wollastonit und spezielle anorganische Füllfasern zum Einsatz kommen. Es hat sich jedoch gezeigt, daß die dort vorgesehene Vakuumbehandlung zum Absaugen von Flüssigkeit nur bei relativ geringen Plattendicken rationell und fertigungsrelevant durchführbar ist.

Bei dem Verfahren zur Herstellung von nichtbrennbaren asbestfreien Tafeln nach AT 379 365 wird von einer Siebtrocknung oder einer anderen Filtereinrichtung ausgegangen, die eine wässrige Suspension aus einem Tonbindemittel, einer glasartigen anorganischen Faserverstärkung und Stärke aufnimmt, wobei die entwässerte Suspension unter Erhalt einer Tafel trocknet. Die wässrige Suspension enthält gemäß der als bevorzugt herausgestellten Ausführungsform ungebrannten plastischen Ton, glasartige anorganische Fasern, Stärke sowie organische, bahnbildende Fasern. Als letztere kommen Zellulosefasern zum Einsatz.

Die Anwendung einer Langsiebtechnologie zur Herstellung eines Dämmstoffs ist aus der DE 44 02 244 A1 bekannt. So wird zunächst eine wässrige Suspension aus dort vorgesehenem zerfaserten Altpapier und Wasser gebildet und es erfolgt eine Zugabe einer vorgegebenen Menge tierischer und/oder pflanzlicher Fasern. Nach einem Mischen der wässrigen Suspension wird diese auf einem Blattbildner aufgebracht und verteilt, wobei als Blattbildner bevorzugt ein Sieb Verwendung findet. Im Anschluß erfolgt ein Entfernen des überwiegenden Teils des Wassers unter Erhalt eines flächigen, flexiblen bis festen mattenartigen Gefüges, welches dann getrocknet und konfektioniert werden kann.
Die bekannte Langsiebanlage oder Rundsiebanlage ermöglicht einen kontinuierlichen Verfahrensablauf mit einer relativ hohen Produktivität bei vergleichsweise günstigen Kosten.

Auf die Anmelderin zurückgehend liegen umfangreiche Erfahrungen zur Herstellung von sogenannten Boards nach der Langsiebtechnologie vor, wobei die Boards zum Zwecke der Isolierung von Brennkammern in z.B. Gasthermen Verwendung finden. Das Boardmaterial besteht üblicherweise aus Keramikfasern, Füllstoffen und einem Binder.

Aufgrund einer Einstufung der bisher verwendeten Keramikfasern als krebserzeugender Gefahrenstoff wird allgemein gefordert, daß Isoliermaterialien ohne Keramikfasern bereitzustellen sind. Zum Einsatz kommen daher sogenannte biolösliche Hochtemperaturfasern, die mehr als 18 Gew.-% Alkali-und Erdalkalioxide enthalten und die nicht als Gefahrstoff bewertet sind. Durch die hier allerdings gegebene Fasermorphologie resultieren jedoch bezogen auf die Verarbeitung auf Langsiebanlagen schlechtere technologische Eigenschaften. Es ist daher ein einfacher Austausch von Keramikfasern durch biolösliche Hochtemperaturfasern nicht möglich.

Um für die Langsiebtechnologie geeignet zu sein, muß das Ausgangsmaterial sowohl eine gute Naß- als auch Trockenfestigkeit und eine ausreichende Biegsamkeit im nassen Zustand besitzen. Der nach der EP 0 936 199 A2 beschriebene Isolierkörper ist zu spröde und brüchig, um nach dem an sich vorteilhaften Langsiebverfahren gefertigt zu werden. Grundsätzlich besteht zwar die Möglichkeit des Zusatzes von bekannten organischen Bindern, wie z.B. Zellulosefasern oder organischen Synthesefasern, ein solcher Einsatz schließt sich jedoch daher aus, da insbesondere für Brennkammerisolierungen bei Gasthermen eine sogenannte Rauchfreiheit bei Erhitzung gefordert wird.

Aus dem Vorgenannten ist es daher Aufgabe der Erfindung, einen flächigen Hochtemperatur-Isolierkörper anzugeben, welcher auf Langsiebanlagen in hoher Produktivität gefertigt werden kann und der allen Anforderungen hinsichtlich einer Bioverträglichkeit genügt und welcher im Hochtemperatureinsatz nur einen geringen Schwund zeigt. Weiterhin ist es Aufgabe der Erfindung, ein Verfahren zur Herstellung von derartigen flächigen Hochtemperatur-Isolierkörpern auf Langsiebanlagen anzugeben.

Die Lösung der Aufgabe der Erfindung erfolgt bezüglich des Isolierkörpers mit einer Lehre nach den Merkmalen des Patentanspruchs 1 sowie hinsichtlich des Verfahrens mit einer Abfolge gemäß Patentanspruch 3, wobei die Unteransprüche mindestens zweckmäßige Ausgestaltungen und Weiterbildungen umfassen.

Gemäß dem Grundgedanken der Erfindung werden dem Hochtemperatur-Isolierkörper bei der Herstellung extrem feine Mikroglasfasern mit einem mittleren Faserdurchmesser von ≤0,6 µm zugefügt. Diese Mikroglasfasern legen ein engmaschiges Netz mit hoher Festigkeit und Biegsamkeit, wobei mit geringerem Faserdurchmesser sich eine höhere Festigkeit ergibt und die Zusatzmenge an Fasern reduziert werden kann.

Es hat sich gezeigt, daß ein optimaler Bereich der Zugabe von Mikroglasfasern bei einem Anteil von 0,5 bis 2 % der Gesamtfeststoffmenge liegt. Aufgrund der geforderten Biolöslichkeit sind nur solche Glasfasern zu verwenden, deren Anteil an Alkali-und Erdalkalioxiden > 18 % ist.

Weiterhin ist eine Tonzugabe erfindungswesentlich, da hieraus eine besonders gute mechanische Stabilität als Voraussetzung für die weitere Bearbeitung des Materials gegeben ist.

Letztendlich wird das aus dem Stand der Technik bekannte Wollastonit als Keramikfaser-Ersatzstoff zugegeben, wobei das Verhältnis zwischen mittlerer Länge zu Durchmesser der Fasern im Bereich von 15 : 1 liegt.

Wollastonit besteht hauptsächlich aus CaSiO₃, wobei Eisen, Magnesium oder Mangan das Kalzium ersetzen können.

Die Zugabe von Ton wird bis zu 20% der Gesamtfeststoffmenge vorgenommen, wobei der Korngrößenanteil <2 µm im Bereich von mindestens 65 bis 75% liegt und grobkörnige Anteile > 63 µm gering zu halten sind.

In Ausgestaltung der Erfindung liegt der Faserfüllstoff-Anteil bei im wesentlichen 15 bis 20% und der Wollastonitanteil bei im wesentlichen 40 bis 50% der Gesamtstoffmenge.

Es hat sich gezeigt, daß ein Plattenmaterial als Hochtemperatur-Isolierkörper gemäß der Erfindung, beispielsweise in einer Stärke von 5 bis 15 mm, sehr gut einer nachfolgenden mechanischen Bearbeitung unterzogen werden kann. Bei dieser mechanischen Bearbeitung wird durch Sägen, Fräsen, Schleifen, Bohren oder dergleichen eine zeichnungsgerechte Teilefertigung erreicht. Die gewünschte hohe mechanische Festigkeit und eine geringe Staubentwicklung beim üblichen spanenden Bearbeiten ist gegeben. Als weiterer Vorteil zeigt sich, daß der erfindungsgemäße Hochtemperatur-Isolierkörper nicht dazu neigt, im späteren Betriebszustand Partikel, die sich aus dem Isoliermaterial lösen, abzugeben und die womöglich die Brennerplatte beim Einsatz in Gasthermen oder dergleichen verunreinigen.

Weiterhin ist die Geruchsbelästigung bei Inbetriebnahme unter Nutzung der erfindungsgemäßen Hochtemperatur-Isolierkörper minimal. Ebenso wenig tritt eine Rißneigung oder der erwähnte Materialabtrag durch Gaserosion auf.

Der einzusetzende Ton ist durch eine hohe Trockenbiegefestigkeit sowie eine geringe Brennschwindung und einen niedrigen Glühverlust neben den Korngrößenverteilungen wie oben erwähnt, gekennzeichnet.

Bei dem Verfahren zur Herstellung von flächigen Hochtemperatur-Isolierkörpern auf Langsiebanlagen wird zunächst vom Bilden einer wässrigen Suspension, enthaltend Hochtemperaturfasern, in einer Bütte ausgegangen. Im Anschluß erfolgt ein Suspendieren einer vorgegebenen Menge von Mikroglasfasern, deren mittlerer Faserdurchmesser im Bereich von ≤ 0,6 µm liegt, vorzugsweise mit Hilfe eines Turbolösers. Die so erstellte Suspension wird dann in die Bütte aufgegeben.

Weiterhin werden Füllstoffe, nämlich Wollastonit und Ton, im Turbolöser suspendiert, ein anorganischer Binder zugegeben und diese Mischung den übrigen Rohstoffen in der Bütte zugegeben. Als anorganischer Binder wird bevorzugt eine kolloidale Kieselsäurelösung mit anionischer Ladung verwendet. Im Turbolöser in Wasser gelöste Stärke wird als etwa 1%ige Lösung auf die gesamte Mischung der Bütte zugeführt und es erfolgt hiernach ein Auffüllen mit Wasser zum Einstellen einer im wesentlich konstanten Stoffdichte. Im Stoffverdünnungskasten kann dann die Suspension je nach Bedarf nochmals mit Wasser verdünnt werden.

Die Mischung wird dann flächig auf einen Blattbilder, insbesondere Sieb einer Siebanlage aufgebracht und dort verteilt, wobei ein Entfernen des Wassers auf der Naßpartie der erwähnten Langsiebanlage bis zu einem Restwassergehalt von im wesentlichen 50% vorgenommen wird. Über einen Ofen erfolgt dann ein Fertigtrocknen bis zu einer Endfeuchte von < 5% Wassergehalt sowie ein Konfektionieren und mechanisches Fertigbearbeiten der Isolierkörper.

Die Stoffdichte der Suspension wird auf im wesentlichen 6 bis 8% eingestellt. Der Mikroglasfaser-Anteil liegt im Bereich von 0,5 bis 2% der Gesamtfeststoffmenge, wobei die Glasfasern einen Anteil an Alkali- oder Erdalkalioxiden von > 18% besitzen. Zum Reduzieren der organischen Produktanteile wird eine kationische Stärke mit hoher Ladungsdichte eingesetzt.

Zum Einstellen und Anpassen des Flockungsverhaltens kommt als Retentionsmittel eine im wesentlichen 0,1 bis 0,2%ige Lösung eines kationischen Polyacrylamids zum Einsatz.

Mit dem beschriebenen Verfahren zum Herstellen von Isolierkörpern auf einer Langsiebanlage können Plattenstärken im Bereich von 5 bis 15 mm gefertigt werden, die in der gewünschten Weise nach Kundenwunsch endbearbeitet werden können.

Die Rezepturen und Eigenschaften von realisierten Hochtemperatur-Isolierkörpern (Boards) insbesondere für den Einsatz als Brennkammerisolierungen sind der nachstehenden Übersicht zu entnehmen, wobei hier ergänzend die chemische Zusammensetzung der eingesetzten Hochtemperaturfasern erläutert ist.

| Rezeptübersicht (in %) und Eigenschaften von Boards für Brennkammerisolierungen | | | | |
|---|---|---|---|---|
| | Board A | Board B1 | Board B2 | Board C |
| Faser Typ A | 51,0 | | | |
| Faser Typ B | | 18,7 | | |
| Langfaser Typ B | | | 18,7 | |
| Faser Typ C | | | | 23,2 |
| Wollastonit | - | 46,9 | 46.9 | 58,1 |
| Ton | 38,0 | 18,7 | 18,7 | - |
| Kieselsol | 7,4 | 11,8 | 11,8 | 14,2 |
| Stärke | 2,2 | 2,8 | 2,8 | 3,4 |
| Glasfaser | 1,4 | 1,1 | 1,1 | 1,1 |
| Summe | 100,0 | 100,0 | 100,0 | 100,0 |
| Dichte g/cm³ | 0,44 | 0,60 | 0,49 | 0,44 |
| | | | | |
| Eindrucktiefe mm (⌀ Kugel:25 mm Last: 7,5N) | 0,16 | 0,09 | 0,12 | 0,20 |
| | | | | |
| (Lin. Schwindung % 24h, 1100°C) | 1,76 | 0,50 | 0,39 | 1,27 |
| | | | | |
| Verhalten in Brennkammer mit max. 780°C auf heißer Seite | gut | - | - | - |
| | | | | |
| Verhalten in Brennkammer mit max. 970°C auf heißer Seite | weniger gut | weniger gut | gut | sehr gut |

| Chemische Zusammensetzung der Hochtemperaturfasern (%) | | | |
|---|---|---|---|
| | SiO₂ | Al₂O₃ | CaO+MgO |
| Typ A | 38 - 43 | 18 - 23 | 23 - 28 |
| Typ B | 61 - 67 | - | 29 - 40 |
| Typ C | 72 - 77 | - | 19 - 26 |

Die Erfindung soll nachstehend eines Ausführungsbeispiels sowie unter Zuhilfenahme einer Figur näher erläutert werden.

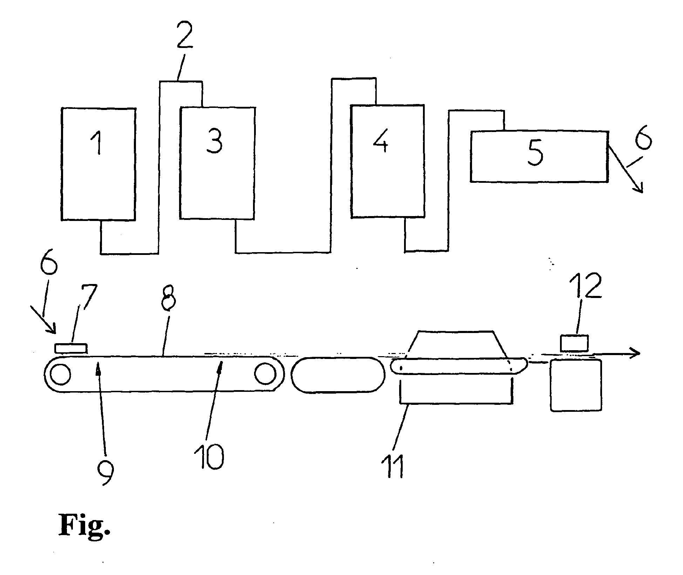

Die Figur zeigt hierbei den prinzipiellen Aufbau einer Langsiebanlage, wie sie zur Herstellung von flächigen Hochtemperatur-Isolierkörpern Verwendung findet.

Ein Turbolöser 1 ist über Rohrleitungen 2 mit der Mischbütte 3 verbunden. Die Mischbütte 3 wiederum steht über entsprechende weitere Leitungen mit einer Vorratsbütte 4 in Verbindung. Der Vorratsbütte 4 nachgeordnet ist ein sogenannter Stoffverdünnungskasten 5. Eine Rohrverbindung 6 führt auf einen Stoffauflauf 7 eines Langsiebs 8. Das Langsieb umfaßt eine Registerpartie 9 sowie eine Saugerpartie 10. Dem Langsieb 8 schließt sich ein einstufiger oder mehrstufiger Trockner 11 an, an dessen Ausgang das plattenartige Material dem Querschneider 12 zugeführt ist.

Das am Querschneider 12 auf Rohformat gebrachte bis zu 15 mm dicke Plattenmaterial wird einer weiteren mechanischen Bearbeitung unterzogen, wobei hier Sägen, Fräsen, Schleifen, Bohren und dergleichen zur Anwendung kommen, um nach Kundenwunsch zeichnungsgerechte Teile zu fertigen.

Gemäß Ausführungsbeispiel wird verfahrensseitig nach Vorlegen von Wasser in die Bütte ein Suspendieren von Hochtemperaturfasern in der Bütte vorgenommen. Weiterhin erfolgt ein Suspendieren von Mikroglasfasern im Turbolöser, wobei diese Mischung dann den anderen Fasern in der Bütte zugeführt wird.

Füllstoffe, nämlich Wollastonit und Ton, werden ebenfalls im Turbolöser suspendiert. Es wird dann anorganischer Binder zugefügt und dies den übrigen Rohstoffen, die sich in der Bütte befinden, zugegeben.

Im Turbolöser in Wasser gelöste Stärke wird als ca. 1%ige Lösung der gesamten Mischung zugegeben.
Durch Auffüllen mit Wasser läßt sich dann eine konstante Stoffdichte von beispielsweise 7% einstellen. Der Stoffverdünnungskasten dient der bedarfsweisen nochmaligen Verdünnung der Suspension mit Wasser.

Durch Zugabe eines an sich bekannten Retentionsmittels in die Rohrleitung 6 kann die bereits eingetretene Flockung zusätzlich noch an das momentan an der Naßpartie herrschende Absaugverhalten der Suspension angepaßt werden. Als Retentionsmittel wird eine ca. 0,1 bis 0,2%ige Lösung eines kationischen Polyacrylamids eingesetzt. Die Zugabemengen richten sich hierbei nach der Maschinengeschwindigkeit und der Höhe der auf der Naßpartie gebildeten Stoffbahn und liegen im Bereich von im wesentlichen 150 bis 250 l/h.

Durch Entwässerung der Suspension bildet sich auf der Naßpartie eine Stoffbahn, die am Ende des Langsiebs 8 noch einen Wassergehalt von 50 bis 55% aufweist.

Die in diesem Zustand noch sehr weiche Bahn wird im Trockner 11 bis auf eine Endfeuchte von < 5% getrocknet. Am Querschneider 12 wird das trockene Material auf ein Rohformat geschnitten und abgestapelt. Auf die nachfolgenden Bearbeitungsgänge wurde bereits hingewiesen.

Der zugegebene Ton als Füllstoff muß eine möglichst hohe Trockenbiegefestigkeit sowie eine geringe Brennschwindung und einen niedrigen Glühverlust aufweisen. Die Anteile mit einer Korngröße < 2 µm sollen mindestens 65 bis 75% betragen. Grobe Kornanteile im Bereich > 63 µm sind zu vermeiden.

Als anorganischer Binder findet eine kolloidale Kieselsäurelösung mit anionischer Ladung Verwendung. Dieser Binder wird durch Zugabe von gelöster kationischer Stärke im Material fixiert. Hierbei kommt es durch elektrostatische Wechselwirkungen und Ladungsaustausch zur Ausflockung. Die Flocken schließen die Füllstoffpartikel und Fasern mit ein und bewirken eine gute Abtrennung des Wassers aus der Suspension. Damit der organische Anteil im Isoliermaterial möglichst niedrig bleibt, wird bevorzugt eine kationische Stärke mit hoher Ladungsdichte ausgewählt.

Wie dargelegt, ist zur Verbesserung der thermomechanischen Eigenschaften ein nadeliger, verstärkender Füllstoff vorteilhaft, wobei hier bevorzugt auf natürlichen Wollastonit mit einem durchschnittlichen Länge zu Durchmesser-Verhältnis von im wesentlichen 15 : 1 und einem Glühverlust < 0,5% zurückgegriffen wird. Wollastonit kompensiert hierbei die an sich ungünstigen Heißeigenschaften der Hochtemperaturfasern. Insbesondere wird eine Verringerung der linearen Schwindung bei isothermischer Beanspruchung bewirkt.

Im Fall einer Brennkammerisolierung erfolgt die thermische Belastung im ständigen Wechsel durch das Schalten des Brenners. Es wird hier also das Isolationsmaterial nur einseitig und ungleichmäßig erhitzt.

Es hat sich überraschenderweise gezeigt, daß unter solchen Bedingungen das Erreichen einer geringen linearen Schwindung bei einer Prüfung mit isothermischer Belastung über 24 Stunden nicht das entscheidende Kriterium für die richtige Auswahl der Stoffe bzw. der Mischung ist. So wurde festgestellt, daß Isolierkörper, die im Test bei 1100°C einen sehr geringen Schwund von < 0,5% aufwiesen, im praktischen Brennkammertest bereits nach wenigen Temperaturwechseln Risse zeigten. Auch wurde festgestellt, daß die Faserlänge der Hochtemperaturfasern einen Einfluß auf die maßgeblichen Heißeigenschaften ausüben. Besonders vorteilhaft ist daher der Einsatz möglichst langer Fasern. Diese erhält man dadurch, daß im Zerfaserungsprozeß ein Oberflächengleitmittel zugesetzt wird. Unter Berücksichtigung der sich allerdings ergebenden schlechteren Verarbeitbarkeit der Suspension aufgrund langer Fasern sowie mit Blick auf die Oberflächengüte des Materials liegt das als Auswahlkriterium gefundene Optimum bei einem Anteil von 15 bis 20% bezogen auf den Gesamtfeststoff.

Bei der Auswahl geeigneter Boardvarianten für den Einsatz in den Brennkammern von z.B. Gasthermen spielen die jeweiligen Einbauverhältnisse eine maßgebliche Rolle. Mit größer werdenden Abmessungen der Isolierteile und mit steigender Maximaltemperatur auf der heißen Seite ergeben sich steigende Anforderungen. Bei geringen derartigen Anforderungen kann Board A mit gutem Erfolg verwendet werden. Bei höheren Ansprüchen empfiehlt sich das Einsetzen von Board B oder C gemäß der beschriebenen Rezeptübersicht.

Es sei noch angemerkt, daß über eine Steuerung der Stoffauflaufmenge und der Siebgeschwindigkeit die Dicke der zu schaffenden Isolierkörper sich einstellen bzw. verändern läßt. Vorteilhafterweise wird bei der erfindungsgemäß eingesetzten Langsiebanlage ein umlaufendes Band als Sieb verwendet.
Es sei noch erwähnt, daß das Sieb 8 seitliche, umlaufende Deckelriemen besitzt, so daß ein unerwünschtes Abfließen der Suspension vermieden wird. Bevorzugt ist das Sieb aus Polyester gefertigt und läuft mit konstanter, einstellbarer Geschwindigkeit um, welche im Bereich von 0,5 bis 18 m/min liegt.
Selbstverständlich besteht die Möglichkeit, mehrere Siebstrecken hintereinander zu schalten. Ausgangsseitig einer Siebstrecke kann ein Walzenpaar angeordnet sein, um die Oberflächenbeschaffenheit des sich ausbildenden Gefüges verändern zu können. Grundsätzlich soll möglichst viel Wasser der Suspension bzw. der Mischung innerhalb der Siebstrecke entzogen werden, da hier die Wasserentfernung deutlich kostengünstiger ist als mit einem intensiven Wärmetrocknungsprozeß.

Das ausgangsseitig der Siebanlage bereits eine festere Konsistenz aufweisende Gefüge wird mittels eines umlaufenden Förderbands in den Trockner 11 überführt. Der Trockner ist als Umlufttrockensystem bestehend aus Heizregister und Lüfter ausgeführt. Die Trockentemperatur kann im Bereich bis zu 150°C liegen.

Zusammenfassend gelingt es mit dem vorgestellten Verfahren, in konstengünstiger Weise flächige Hochtemperatur-Isolierkörper zu fertigen, welche allen Anforderungen an eine Brennkammerisolierung von insbesondere Gasthermen Rechnung tragen. Die vorgestellten Materialien sind bioverträglich und entsprechen allen sonstigen qualitativen Anforderungen insbesondere bezüglich eines geringen Materialabtrags durch Gaserosion.

### Bezugszeichen

- 1: Turbolöser
- 2: Rohrleitungen
- 3: Mischbütte
- 4: Vorratsbütte
- 5: Stoffverdünnungskasten
- 6: Rohrleitung
- 7: Stoffauflauf
- 8: Langsieb
- 9: Registerpartie
- 10: Saugerpartie
- 11: Trockner
- 12: Querschneider

## Patentansprüche

1. Flächiger Hochtemperatur-Isolierkörper, bestehend aus anorganischem Faserfüllstoff, natürlichem Wollastonit sowie Bindemittel,
**gekennzeichnet durch**
feine Mikroglasfasern mit einem Anteil im Bereich von 0,5 bis 2% der Gesamtfeststoffmenge, wobei die Fasern einen Anteil an Alkali- und Erdalkalioxiden von > 18% besitzen, und wobei der mittlere Faserdurchmesser im Bereich ≤ 0,6 µm liegt,
Tonanteil von bis zu 20% der Gesamtfeststoffmenge, wobei der Korngrößenanteil < 2 µm im Bereich von mindestens 65% bis 75% liegt und grobkörnige Anteile > 63 µm zu vermeiden sind und
Wollastonit mit einem mittleren Längen- zu Durchmesser-Verhältnis von 15 : 1 und einem Glühverlust von < 0,5%.

2. Flächiger Hochtemperatur-Isolierkörper nach Anspruch 1,
**dadurch gekennzeichnet, daß**
der Faserstoffanteil bei im wesentlichen 15 bis 20% und der Wollastonit-Anteil bei im wesentlichen 40 bis 50% der Gesamtfeststoffmenge liegt.

3. Verfahren zur Herstellung von flächigen Hochtemperatur-Isolierkörpern gemäß Anspruch 1 oder 2 auf Langsiebanlagen mit folgenden Schritten:
- Bilden einer wässrigen Suspension, enthaltend Hochtemperaturfasern in einer Bütte,
- Suspendieren einer vorgegebenen Menge von Mikroglasfasern, deren mittlerer Faserdurchmesser im Bereich von ≤ 0,6 µm liegt, vorzugsweise mittels Turbolöser und in die Bütte Aufgeben,
- Suspendieren von Füllstoffen, wobei diese natürliches Wollastonit und Ton umfassen, Zugeben von anorganischem Binder, bevorzugt in Form einer kolloidalen Kieselsäurelösung mit anionischer Ladung sowie in die Büttemischung Aufgeben,
- Zugeben gelöster Stärke in die Gesamtmischung,
- Einstellen einer vorgegebenen Stoffdichte durch Wasserzugabe,
- flächiges Aufbringen und Verteilen der Mischung auf einem Blattbildner, insbesondere Sieb der Langsiebanlage,
- Entfernen des Wassers auf der Naßpartie der Langsiebanlage bis zu einem Restwassergehalt von im wesentlichen 50%,
- Fertigtrocknen bis zu einer Endfeuchte von < 5% Wassergehalt und
- Konfektionieren sowie mechanisches Fertigbearbeiten.

4. Verfahren nach Anspruch 3,
**dadurch gekennzeichnet, daß**
eine im wesentlichen 1%ige Stärkelösung der Mischung zugegeben wird.

5. Verfahren nach Anspruch 3 oder 4,
**dadurch gekennzeichnet, daß**
die Stoffdichte auf im wesentlichen 6 bis 8% eingestellt wird.

6. Verfahren nach einem der Ansprüche 3 bis 5,
**dadurch gekennzeichnet, daß**
zum Reduzieren organischer Produktanteile kationische Stärke mit hoher Ladungsdichte eingesetzt wird.

7. Verfahren nach einem der Ansprüche 3 bis 6,
**dadurch gekennzeichnet, daß**
zum Einstellen und Anpassen des Flockungsverhaltens als Retentionsmittel eine im wesentlichen 0,1 bis 0,2%ige Lösung eines kationischen Polyacrylamids zugesetzt wird.

8. Verfahren nach einem der Ansprüche 3 bis 7,
**dadurch gekennzeichnet, daß**
die Materialstärke der gefertigten Körper oder Platten im Bereich von 5 bis 15 mm liegt, wobei die Endbearbeitung nach Kundenwunsch durch Schneiden, Stanzen oder spanende Fertigungsschritte erfolgt.

## Claims

1. Planar body for high-temperature insulation, composed of an inorganic fiber filler, natural wollastonite and a binding agent,
**characterized by**
fine micro-glass fibers having a proportion in the range of 0.5 to 2% of the total amount of solid matter, wherein the fibers have a proportion of alkali oxides and alkaline earth oxides of > 18% and wherein the average fiber diameter is in the range of ≤ 0.6 µm,
a proportion of argil of up to 20% of the total amount of solid matter, wherein the grain size proportion < 2 µm is in the range of at least 65% to 75% and coarse-grained proportions > 63 µm are to be avoided, and
wollastonite having an average length-to-diameter ratio of 15:1 and an ignition loss of < 0.5%.

2. Planar body for high-temperature insulation according to claim 1,
**characterized in that**
the proportion of fiber material is substantially 15 to 20% and the wollastonite proportion is substantially 40 to 50% of the total amount of solid matter.

3. Process for fabricating planar bodies for high-temperature insulation according to claim 1 or 2 on Fourdrinier-type machines, comprising the following steps:
- forming an aqueous suspension containing high-temperature fibers in a vat,
- suspending a predefined amount of micro-glass fibers, the average fiber diameter of which is in the range of ≤ 0.6 µm, preferably by means of a turbo-dissolver and feeding it into the vat,
- suspending fillers, said fillers including natural wollastonite and argil, adding an inorganic binding agent, preferably in the form of a colloidal silicic acid solution with an anionic charge, and feeding it into the vat mixture,
- adding dissolved starch to the total mixture,
- adjusting a predefined consistency by adding water,
- applying and distributing the mixture to and on a sheet former, specifically a wire of the Fourdrinier-type machine, in a planar manner,
- removing the water on the wet end section of the Fourdrinier-type machine up to a residual water content of substantially 50%,
- finalizing the drying up to a final moisture of < 5% of the water content, and
- assembling and mechanical finishing.

4. Process according to claim 3,
**characterized in that**
a starch solution of substantially 1% is added to the mixture.

5. Process according to claim 3 or 4,
**characterized in that**
the consistency is adjusted to substantially 6 to 8%.

6. Process according to one of claims 3 to 5,
**characterized in that**
cationic starch having a high charge density is used to reduce organic product portions.

7. Process according to one of claims 3 to 6,
**characterized in that**
a solution of a cationic polyacrylamide of substantially 0.1 to 0.2% is added as retention means to establish and adjust the flocculation behavior.

8. Process according to one of claims 3 to 7,
**characterized in that**
the material strength of the fabricated bodies or plates is in the range of 5 to 15 mm, wherein the finishing is customized by cutting, punching or machining fabrication steps.

## Revendications

1. Corps surfacique isolant à haute température, composé d'une matière fibreuse inorganique, de wollastonite naturelle et de liant,
**caractérisé par** :
des fines microfibres de verre en proportion dans la plage de 0,5 à 2 % de la quantité totale de matières solides, les fibres possédant une proportion d'oxydes alcalins et d'oxydes alcalinoterreux supérieure à 18 %, et le diamètre moyen des fibres étant dans une plage ≤ 0,6 µm,
de l'argile en proportion allant jusqu'à 20 % de la quantité totale de matières solides, la part des particules inférieures à 2 µm étant dans une plage d'au moins 65 % à 75 %, des particules grossières supérieures à 63 µm étant à éviter, et la wollastonite se présente avec un rapport moyen longueur sur diamètre de 15:1, et une perte par calcination inférieure à 0,5 %.

2. Corps surfacique isolant à haute température selon la revendication 1,
**caractérisé en ce que** la proportion de fibres est essentiellement de 15 à 20 % et la proportion de wollastonite est essentiellement de 40 à 50 % de la quantité totale de matières solides.

3. Procédé pour la fabrication de corps surfaciques isolants à haute température selon la revendication 1 ou 2, sur des installations de criblage allongées, comportant les étapes suivantes :
- formation d'une suspension aqueuse, contenant des fibres à haute température dans un bac,
- mise en suspension d'une quantité prédéterminée de microfibres de verre dont le diamètre de fibres moyen est dans la plage ≤ 0,6 µm, de préférence au moyen d'un turbosolvant, et amenée dans le bac,
- mise en suspension de matières de remplissage, celles-ci comprenant de la wollastonite et de l'argile, addition de liant inorganique, de préférence sous la forme d'une solution colloïdale d'acide silicique avec charge anionique et amenée dans le mélange dans le bac,
- addition d'amidon dissous dans le mélange global,
- établissement d'une densité prédéterminée par addition d'eau,
- application en surface et répartition du mélange sur un formateur de feuilles, en particulier un crible de l'installation de criblage allongée,
- élimination de l'eau sur la partie humide de l'installation de criblage allongée jusqu'à une teneur résiduelle en eau essentiellement de 50 %,
- séchage à finition jusqu'à une humidité finale inférieure à 5 % de teneur en eau, et
- confection et transformation finale mécanique.

4. Procédé selon la revendication 3,
**caractérisé en ce que** l'on ajoute au mélange une solution d'amidon sensiblement à 1 %.

5. Procédé selon la revendication 3 ou 4,
**caractérisé en ce que** la densité est établie essentiellement de 6 à 8 %.

6. Procédé selon l'une des revendications 3 à 5,
**caractérisé en ce que**, pour la réduction des parts de produits organiques en emploi de l'amidon cationique à haute densité de charge.

7. Procédé selon l'une des revendications 3 à 6,
**caractérisé en ce que** pour établir et ajuster le comportement de flocage on ajoute en guise de moyen de rétention une solution essentiellement de 0,1 à 0,2 % d'un polyacrylamide cationique.

8. Procédé selon l'une des revendications 3 à 7,
**caractérisé en ce que** l'épaisseur du matériau des corps ou des plaques fini(e)s est dans la plage de 5 à 15 mm, le traitement final ayant lieu, selon le souhait de la clientèle, par découpe, poinçonnage, ou par des opérations d'usinage par enlèvement de matière.
